# EUROPEAN PATENT APPLICATION

(11) **EP 4 258 304 A1**
(43) Date of publication of application: **11.10.2023**
(21) Application number: 22166668.8
(22) Date of filing: 05.04.2022
(51) Int. Cl.: H01F 41/04, H01F 38/08, H01F 27/28, H01F 27/16

(54) **METHOD FOR PRODUCING A WINDING FOR A WELDING TRANSFORMER AND WINDING FOR A WELDING TRANSFORMER**

(71) Applicant: Robert Bosch GmbH, 70442 Stuttgart (DE)
(72) Inventor: Rihtarsic, Damjan, 4245 Kropa (SI); Solar, Anton, 4228 Zelezniki (SI)

(57) **Abstract**

There is provided a method for producing a winding (35) for a welding transformer (30) and a winding (35) for a welding transformer (30). In particular, the winding is (35) a secondary winding for the welding transformer (30). In the method, handling a one-piece profile (350; 3500) is performed for forming a one-piece winding module (35A; 35B) which comprises a first winding element (351), a second winding element (352) and a base element (353; 353B), wherein each one of the first and second winding elements (351; 352) protrudes from the base element (353; 353B) and wherein the first and second winding elements (351; 352) are positioned spaced to each other at the base element (353; 353B) so that the one-piece profile (350; 3500) and the winding module (35A; 35B) have a t-cross-section. The method further comprises the steps of milling at least one window (3511; 3512) into the first winding element (351) so that the first winding element (351) frames the at least one window (3511; 3512) for accommodating a part of a core (37) of the welding transformer (30), milling at least one window (3521; 3522) into the second winding element (352) so that the second winding element (352) frames the at least one window (3521; 3522) for accommodating a part of the core (37) of the welding transformer (30), and milling grooves (3534, 3535) into the base element (353; 353B) to separate the base element (353; 353B) into sections (3531, 3532, 3533), wherein the grooves (3534, 3535) are milled such that at least one of the sections (3531, 3532, 3533) is connected to the first and second winding elements (351; 352) and such that at least one of the sections (3531, 3532, 3533) is connected to only one of the first and second winding elements (351; 352).

## Description

The present invention relates to a method for producing a winding for a welding transformer and a winding for a welding transformer. In particular, the winding is a secondary winding for the welding transformer.

Welding transformers are used in welding devices for producing a connection of workpieces made from metal. The welding transformer is operated together with a welding tool, which is electrically connected to the secondary side of the welding transformer. Herein, the welding tool may be guided by hand or a robot.

The transformer is often attached to the welding tool to omit a bulky high-voltage cable. In such a case, the transformer needs to be optimized in weight and size to make the handling of the welding tool easy. This facilitates, too, to keep the power consumption of the welding tool low.

The transformer transforms a primary alternating current into a secondary alternating current with the desired intensity and time characteristics. The secondary side of the transformer is connected to a rectifier which rectifies the electric current output from the transformer and provides a direct electric current to at least one welding electrode of the welding tool. The transformer and the rectifier may form a transformer-rectifier-unit.

For producing a welding spot or a welding seam, electrode(s) of the welding tool contact(s) at least one workpiece. The welding transformer is controlled such that it produces electric current flowing via the electrode(s) into the workpieces to melt the metal such that the workpieces are connected by a welding spot or a welding seam.

In the operation of the welding device, high electric currents are produced, which heat up the transformer and the rectifier. To avoid overheating of the transformer, the transformer and the rectifier have to be cooled. The cooling may be accomplished by cooling water flowing through cooling channels formed in the windings of the welding transformer.

The windings, in particular the secondary winding, of the welding transformer form a part having a rather complex geometry and several components. Currently, it is common practice to use more than one component, usually several components, made of copper to build the windings, in particular the secondary winding, for the welding transformer. At first, the components are prepared by water-cutting the needed copper plates from a raw material. Thereafter, the copper plates are machined to produce the required holes in the plates for the cooling channels and for assembling the plates to the welding device. Then, the machined copper plates are assembled and brazed to connect the copper plates. Finally, a leaking test for the cooling channels is made to prevent cooling water leaking from the cooling channels.

However, such a process is time-consuming and expensive due to the plurality of production steps which need a lot of different technologies, like water-jet-cutting, milling, brazing. Another reason for the costs of such a process is a high consumption of energy for performing the process.

A further drawback lies in that cooling water used to flow in the cooling channels is sometimes aggressive, especially if the cooling water contains sulfur. Such cooling water leads to corrosion destroying the brazed connections of the copper plates. This affects in particular brazed connections made by low content of silver brazing alloy. As a result, water is leaking from the cooling channels. Consequently, the cooling of the welding transformer cannot be secured. Moreover, the welding device may be damaged and/or polluted. Thus, the required quality of the welded products cannot be guaranteed. Due to a resulting failure of the welding device a machine breakdown may occur in a production line.

All these difficulties are especially unacceptable for any production or processing line in which the welding device is to be used.

Therefore it is the object of the present invention to provide a method for producing a winding for a welding transformer and a winding for a welding transformer, which solve the above-mentioned problems and enable in particular to cool a welding transformer in a stable and reliable manner with low costs and which is thus usable in an industrial process of a production line.

This object is solved by a method for producing a winding for a welding transformer according to claim 1. In the method, handling a one-piece profile is performed for forming a one-piece winding module which comprises a first winding element, a second winding element and a base element, wherein each one of the first and second winding elements protrudes from the base element and wherein the first and second winding elements are positioned spaced to each other at the base element so that the one-piece profile and the winding module have a t-cross-section. The method further comprises the steps of milling at least one window into the first winding element so that the first winding element frames the at least one window for accommodating a part of a core of the welding transformer, milling at least one window into the second winding element so that the second winding element frames the at least one window for accommodating a part of the core of the welding transformer, and milling grooves into the base element to separate the base element into sections, wherein the grooves are milled such that at least one of the sections is connected to the first and second winding elements and such that at least one of the sections is connected to only one of the first and second winding elements.

The described winding enables in particular to cool a welding transformer in a stable and reliable manner. Herein, the winding may be produced with less energy even if the shape or design of the winding is unchanged and thus still complex. This is very advantageous as regards a careful handling of resources.

A further advantage lies in that the described winding may be produced with less production steps than known complex windings. Namely, only milling is used for producing the copper module for the winding even if the complex form of the winding remains the same. Water-cutting and brazing is no longer necessary in producing the winding. Thus, tools and knowledge for performing these technologies are not necessary. As a result, the winding can be produced less intricate than in the state of the art. Instead, the method for producing the described winding is very time-efficient and demands lower costs than known processes in this regard.

As still a further advantage, the described winding does not have brazed connections. Thus, leaking is no problem anymore. This is also the fact, when aggressive cooling water is to be used in the cooling channels.

All these advantages result in a winding which is cost effective in production and maintenance. The same is valid for a welding tool, to which the winding is attached, and a generic welding device.

Altogether, the failure of the generic welding device can be minimized which leads to a prolonged life time of the welding device, as well.

And, the use of the described winding can contribute to a stable welding process in which the welding may be performed with high quality. This qualifies the winding to be used in a welding device applied in an industrial process of a production line.

Advantageous further developments of the method are given in the dependent claims.

In one specific implementation, milling one window of the first winding element and milling one window of the second winding element is performed in one milling step.

The above-described method may further comprise the steps of milling first holes into the first and second winding elements as well as the base element to form a cooling channel in the one-piece winding module, and providing each first hole with an insert for sealing the cooling channel to the outside of the one-piece winding module.

The above-described method may further comprise the steps of milling second holes into the base element, and providing at least one of the second holes with an insert for connecting the one-piece winding module with other parts of a transformer-rectifier-unit.

It is further possible that the above-described method further comprises a step of coating the profile or the winding module at least partly by a coating for protecting the winding module against corrosion.

The above-described object is further solved by a winding for a welding transformer according to claim 6. The winding comprises a one-piece winding module built from a one-piece profile. The one-piece winding module comprises a first winding element framing at least one window for accommodating a part of a core of the welding transformer, a second winding element framing at least one window for accommodating a part of the core of the welding transformer, and a base element, wherein each one of the first and second winding elements protrudes from the base element, wherein the first and second winding elements are positioned spaced to each other at the base element so that the one-piece winding module has a t-cross-section, and wherein the base element comprises grooves which separates the base element into sections, and wherein at least one of the sections is connected to the first and second winding elements, and wherein at least one of the sections is connected to only one of the first and second winding elements.

The winding achieves the same advantages as they are mentioned above in respect of the method.

Advantageous further developments of the winding are given in the dependent claims.

Possibly, the first and second winding elements as well as the base element comprise a cooling channel for flowing a coolant through the first and second winding elements as well as the base element. Herein, each one of the first and second winding elements may comprise at least one hole to form the coolant channel, wherein at least one hole in the first and/or second winding elements is a blind hole and at least one hole in the first and/or second winding elements is a through hole so that the holes cross each other to form the coolant channel. Additionally, the one-piece winding module may further comprise inserts in the cooling channel for sealing the cooling channel to the outside of the one-piece winding module or for connecting the cooling channel to a coolant supply.

In one implementation form, the first winding element forms a frame for two windows, the windows of the first winding element are spaced from each other by a bar of the first winding element, the second winding element forms a frame for two windows, and the windows of the second winding element are spaced from each by a bar of the second winding element.

The material of the one-piece winding module may be metal, in particular copper or aluminium.

The profile may be an extruded profile.

The above-described winding may be part of a welding transformer which further comprises a core, and a primary winding, wherein the winding is positioned on the secondary side of the transformer, and wherein the primary winding is mounted to the core and to the secondary winding.

The above-described welding transformer may be part of a welding tool for producing an article. The welding tool may further comprise a control unit configured to adapt a welding current for forming the article by joining at least two parts of one workpiece and/or at least two workpieces by at least one welding joint.

The above-described welding tool may be part of a welding device. The welding device may further comprise a device for moving the welding tool according to a predetermined moving profile along the at least one workpiece, and wherein the article is a vehicle body.

Further possible implementations of the invention comprise also combinations of features or styles described above or in the following with reference to the embodiments, even if they are not explicitly mentioned. Herein, the person skilled in the art will also add single aspects as improvements or additions to the respective basic form of the invention.

In the following, the invention is described in more detail by means of embodiments and with reference to the appended drawing figures, wherein:
Fig. 1 shows a schematic block diagram of a plant having a welding device comprising a welding transformer according to a first embodiment;
Fig. 2 shows a transformer-rectifier unit according to the first embodiment;
Fig. 3 shows a winding module according to the first embodiment which module may be used for a secondary winding of the transformer-rectifier unit of Fig. 2;
Fig. 4 shows a winding module according to a second embodiment, which module may be used for a secondary winding of the transformer-rectifier unit of Fig. 2;
Fig. 5 shows an extruded profile for building the winding module according to the first or second embodiment;
Fig. 6 shows a piece, which is made or cut from the extruded profile of Fig. 5;
Fig. 7 to Fig. 10 each show a different step which is performed in a method to produce the winding module and/or a winding according to the second embodiment; and
Fig. 11 shows the winding which is produced by the method according to the second embodiment.

In the drawing figures, the same or functionally same elements are provided with the same reference signs unless given otherwise.

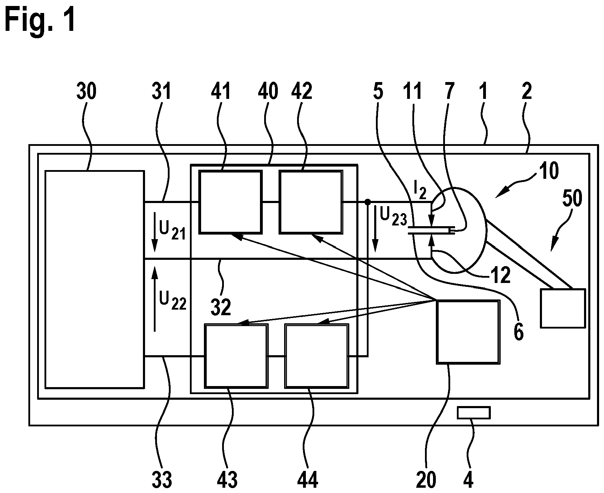

Fig. 1 shows very schematically a plant 1 which comprises a welding device 2, in particular a resistance welding device. The plant 1 is, for example, a production plant for producing articles 4 like vehicles, household devices, heaters, or the like.

In the plant 1, metal workpieces 5, 6 can be connected or joint by welding, especially resistance welding, so that a welded joint 7 is produced. For this purpose, the welding device 2 of Fig. 1 has a welding tool 10 in the form of a welding gun having two welding electrodes 11, 12. The welding device 2 further comprises a control device 20, a welding transformer 30, and a rectifier 40. In the example of Fig. 1, the welding device 2 further comprises a device 50 for guiding the welding tool 10. The device 50 might be a robot.

The welding tool 10 may perform in particular resistance welding. The welding transformer 30 is possibly implemented as an intermediate frequency direct current transformer (MF-DC transformer). Herein, the rectifier 40 is mountable on the welding transformer 30. Thus, a transformer-rectifier unit is formed.

The welding device 2 can use the welding tool 10 to produce the welded joint 7 under the control of the control device 20. It is possible herein, for example, that two edges or corners of a single workpiece 5 are connected to one another by forming one or more welded joints 7. Regardless of how many workpieces 5, 6 are connected to each other by means of at least one welded joint 7, the welded joint 7 can be implemented as a spot weld or a weld seam or a combination thereof. The device 50 may move the welding tool 10 according to a predetermined moving profile along the at least one workpiece 5, 6.

In a welding method for welding with the welding device 2, at least one of the welding electrodes 11, 12 contacts at least one workpiece 5, 6, and at least one welding transformer 30 is used to weld the at least one workpiece 5, 6.

On the secondary side of the welding transformer 30, there is a first secondary voltage U21 between the first and second output terminals 31, 32 of the welding transformer 30 in operation of the transformer 30. In addition, a second secondary voltage U22 exists between the second and third output terminals 32 and 33 of the welding transformer 30 in operation of the transformer 30. The first secondary voltage U21 and the second secondary voltage U22 form a welding voltage U23 at the output of the rectifier unit 40, which results in a welding current 12.

The rectifier 40 has in the example of Fig. 1 first to fourth semiconductor devices 41 to 44, for example transistors 41 to 44.

The first semiconductor device 41 is connected to the first output terminal 31 of the welding transformer 30. The second semiconductor device 42 is connected in series to the first semiconductor device 41. Thus, the series connection composed of the first and second semiconductor devices 41, 42 is connected between the welding transformer 30 and the welding tool 10. More precisely, the series connection composed of the first and second semiconductor devices 41, 42 is connected between the secondary side of the welding transformer 30 and the first welding electrode 11.

The second welding electrode 12 is directly connected to the second output terminal 32 of the welding transformer 30.

The third semiconductor device 43 is connected to the third output terminal 32 of the welding transformer 30. The third semiconductor device 43 and the fourth semiconductor device 44 are connected in series. Thus, the series connection composed of the third and fourth semiconductor devices 43, 44 is connected between the welding transformer 30 and the welding tool 10. More precisely, the series connection formed by the third and fourth semiconductor devices 43, 44 is connected between the welding transformer 30 and the first welding electrode 11.

The control device 20 can also be configured to switch the polarity of the welding voltage U23 applied between the welding electrodes 11 and 12. The polarity of the welding voltage U23 can be switched as desired by controlling the switching of the corresponding transistors 41, 42, 43, 44. According to one possibility for the polarity of the welding voltage U23, the electrode 11 is positively polarized and the electrode 12 is negatively polarized. Alternatively, the electrode 11 is negatively polarized and the electrode 12 is positively polarized.

The switching of the polarity of the welding voltage U23 by the welding device 2 can be used advantageously in sheet metal combinations, where undesirable burn-up or material migration of the welding electrode is caused in the welding gun. Furthermore, the resistance welding device 2 can be used particularly advantageously in welding chain links and/or in welding heating bodies.

If it is not required to switch the polarity of the welding voltage U23, which is applied between the welding electrodes 11 and 12, one of the transistors of the series connection of the transistors 41, 42 and one of the transistors of the series connection of the transistors 43, 44 may be omitted.

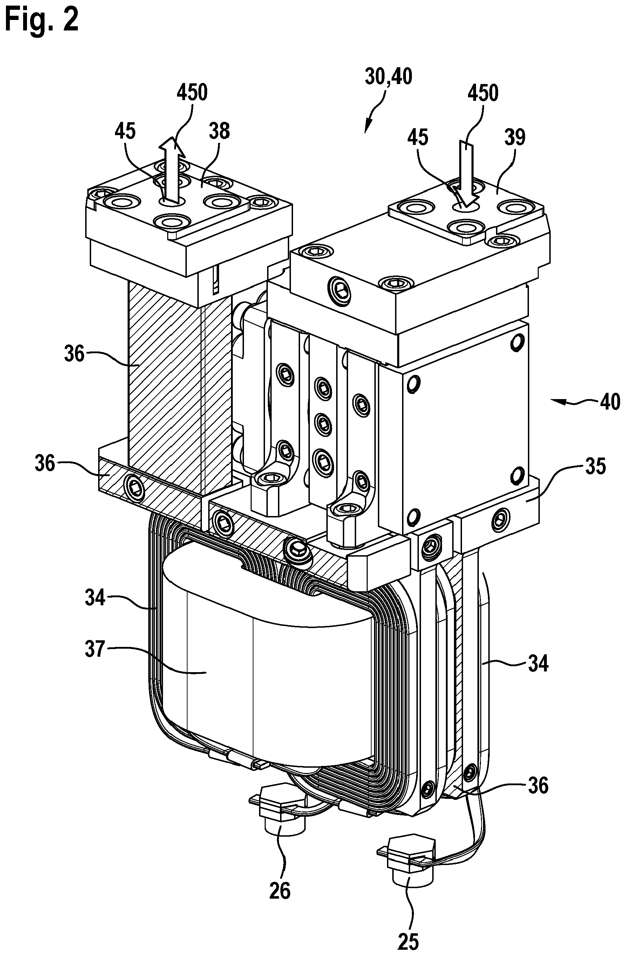

Fig. 2 shows a specific example for building up a transformer-rectifier unit 30, 40 according to the first embodiment. The transformer 30 comprises a primary winding 34, a secondary winding 35, a coating 36, a core 37, a first connecting block 38 and a second connecting block 39. The core 37 is made from a magnetic or ferromagnetic material. The core 37 is made in particular from iron. The coating 36 is illustrated as hachure.

The secondary winding 35 and the rectifier may comprise a cooling channel 45 through which a coolant 450 may flow from an inlet to an outlet, as schematically shown in Fig. 2. The inlet is indicated by an arrow for the coolant 450 flowing into the channel 45. The outlet is indicated by an arrow for the coolant 450 flowing out of the channel 45. The coolant 450 may be water or oil or gas any other suitable coolant.

The primary winding 34 is mounted to connectors 25, 26 for connecting the transformer 30, in particular the primary side of the transformer 30, to an electric power supply. The primary winding 34 may be made from a strap-like wire which is paint by synthetic resin. The primary winding 34 and the secondary winding 35 are wound around the core 37. The primary winding 34 has more windings than the secondary winding 35. Therewith, the electric current on the primary side of the transformer 30 is transformed to an electric current on the secondary side of the transformer 30 which has a higher electric current value than the electric current on the primary side.

The secondary winding 35 of the transformer 30 is mounted to the rectifier 40. Herein, the cooling channel 45 may have parts in the rectifier 40. Further, the secondary winding 35 is mounted to the first connecting block 38. The first connecting block 38 is configured to mount the rectifier 40 to the welding tool 10 of Fig. 1, in particular a robot. The first connecting block 38 and the secondary winding 35 are at least partly coated by the coating 36. The second connecting block 39 is mounted to the rectifier 40. The second connecting block 39 is configured to mount the rectifier 40 to the welding tool 10 of Fig. 1. For example, the first connecting block 38 is used for connecting the transformer-rectifier unit 30, 40 to the negative electrode of the welding tool 10, whereas the second connecting block 39 is used for connecting the transformer-rectifier unit 30, 40 to the positive electrode of the welding tool 10.

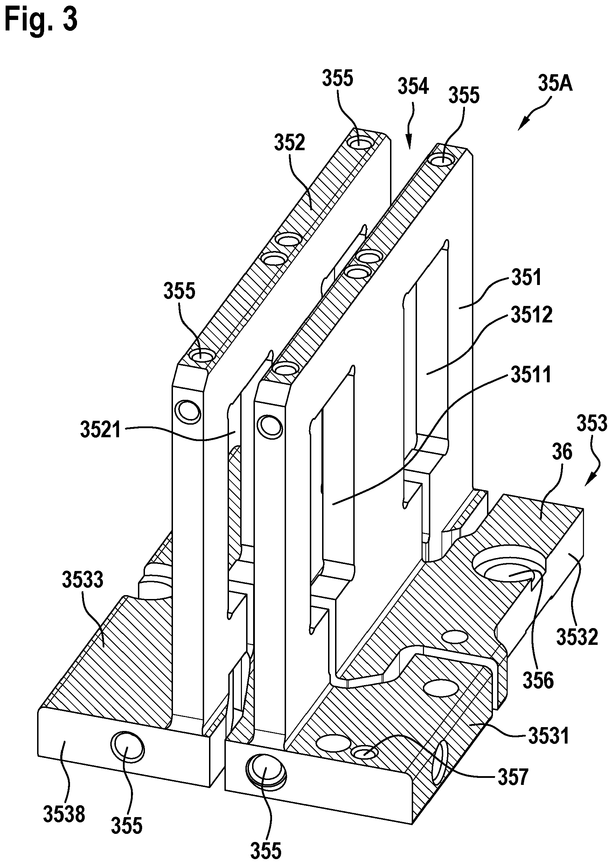

Fig. 3 shows a winding module 35A for the secondary winding 35 of the welding transformer 30 of Fig. 2. The winding module 35A is constructed integrally. That is, the winding module 35A is made from one piece of metal, in particular copper. The winding module 35A may be made from another one-piece material which enables electric conduction. Copper and aluminium are advantageous as regards their comparable small electric resistance and simultaneously high thermic conductivity.

Possibly, the module 35A is coated by the coating 36. The coating 36 may be provided only partly, as shown in Fig. 3 as hachure. The coating 36 may be performed in a step of coating after the profile 3500 is milled into the form shown in Fig. 3. The coating 36 may protect the module 35A against corrosion. For example, the coating 36 may be a coating for passivating the aluminium or an aluminium alloy. In particular, the coating 36 may be an anodization. Alternatively, the coating 36 may be a galvanic coating. Alternatively, the coating 36 may be a chemical coating of nickel. Alternatively, the coating 36 may be a cathodic dip coating. Alternatively, the coating 36 may be a plastic coating. Alternatively or in addition, coolant 450 used in the cooling channel 45 of the module 35A may comprise a corrosion inhibitor.

The module 35A is designed such that it comprises a first winding element 351, a second winding element 352 and a base element 353. The base element 353 has several sections 3531, 3532, 3533, which are each connected with at least one of the winding elements 351, 352. Fig. 3 shows a specific example for an outer contour 3538 of the base element 353. That is, the outer shape 3538 of the base element 353 in Fig. 3 has bevelled edges and is almost rectangular, except for a recess in the section 3532.

The first winding element 351 protrudes from the base element 353. The second winding element 352 protrudes from the base element 353. The first and second winding elements 351, 352 protrude from the same side of the base element 353. The first winding element 351 and the second winding element 352 are positioned in parallel to each other. The first winding element 351 and the second winding element 352 are positioned spaced from one another by a space 354. The first and second winding elements 351, 352 are positioned side by side.

The first winding element 351 has two windows 3511, 3512 as openings for mounting the core 37 shown in Fig. 2. The second winding element 352 has two windows 3521, 3522 as openings for mounting the core 37 shown in Fig. 2.

Each of the winding elements 351, 352 and the base element 353 comprises first holes 355 for building up the cooling channel 45 in the elements 351 to 353. The base element 353 comprises second holes 356 for mounting and fastening the module 35A to the other parts of the transformer-rectifier-unit 30, 40. Further, the base element 353 comprises third holes 357 for mounting and fastening the module 35A to the other parts of the transformer-rectifier-unit 30, 40. For the sake of a clear depiction, only some of the first holes 355, only one of the second holes 356 and only one of the third holes 357 is/are provided with a reference sign in Fig. 3.

The first winding element 351 basically has a rectangular shape. The first winding element 351 forms a frame around the two windows 3511, 3512. Each one of the windows 3511, 3512 basically has a rectangular shape. The second winding element 352 basically has a rectangular shape. The second winding element 352 forms a frame around the two windows 3521, 3522. Each one of the windows 3521, 3522 basically has a rectangular shape. The windows 3511, 3512 are spaced from each other in a direction transverse to the direction in which the first and second winding elements 351, 352 are positioned spaced to each other. The same is valid as regards the windows 3521, 3522. Thus, the windows 3511, 3521 of the first and second winding elements 351, 352 may be milled in one milling step. The same is valid as regards the openings 3512, 3522.

The primary winding 34 may be inserted into the module 35A of Fig. 3, as shown in Fig. 2. In particular, the primary winding 34 may be wound, and thus placed, beside the first winding element 351 and beside the second winding element 352 as well as in the space 354 between the first winding element 351 and the second winding element 352. And, the core 37 may be inserted into the windows 3511, 3512, 3521, 3522 of the first and second winding elements 351, 352. Thus, at least a part of the core 37 is accommodated in each one of the windows 3511, 3512, 3521, 3522.

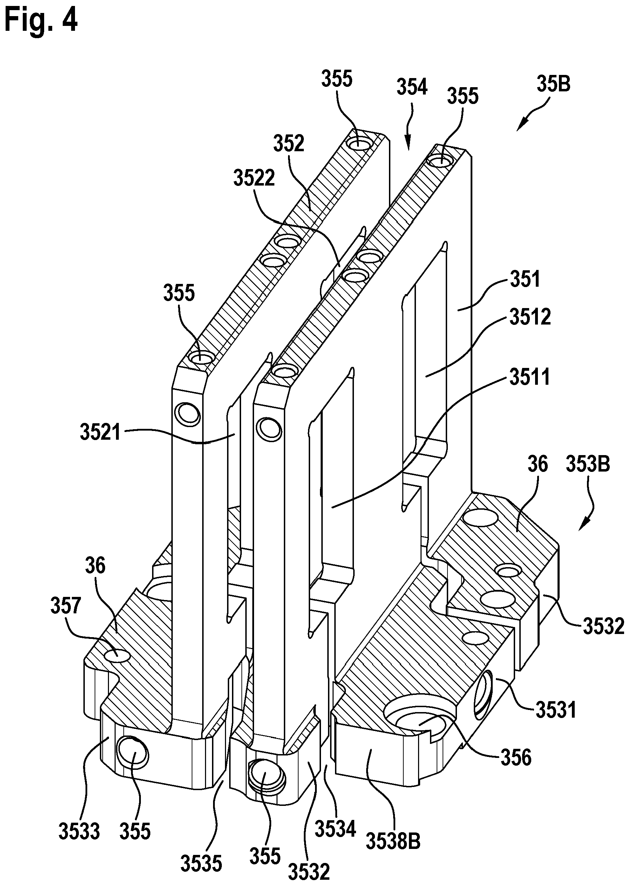

Fig. 4 shows another example of a winding module 35B. In a second embodiment, the winding module 35B may be used for the secondary winding 35 of a transformer-rectifier unit 30, 40. The winding module 35B is configured like the winding module 35A shown in Fig. 3 except for the base element 353B, in particular the outer shape 3538B of the base element 353B and the positions of the holes 356, 357.

That is, also the section 3533 of the module 35B has a recess in the outer shape 3538B. Further, the outer edge of the section 3532 is inclined to build an angular rim. In addition, the position of the holes 356, 357 in the sections 3531, 3532, 3533 is adapted to the configuration of another transformer-rectifier unit which may differ from the configuration of the another transformer-rectifier unit shown in Fig. 2.

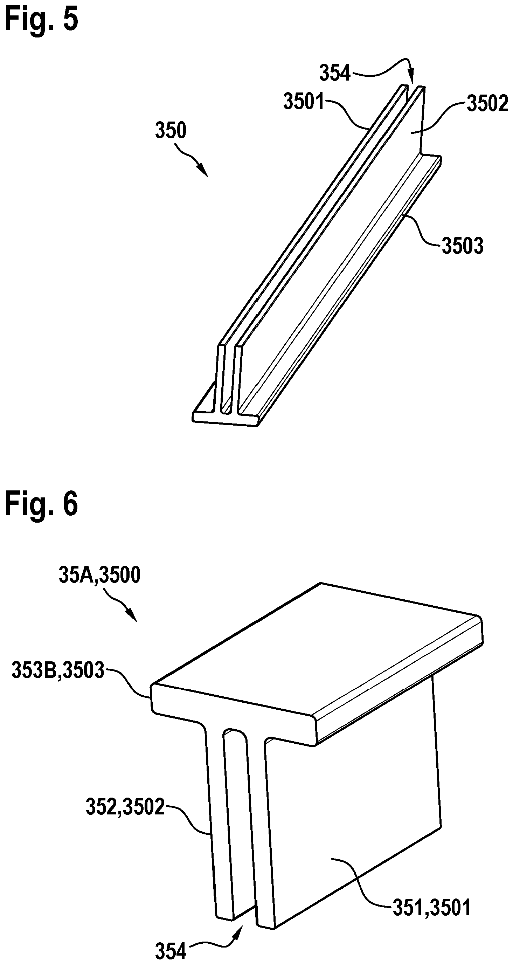

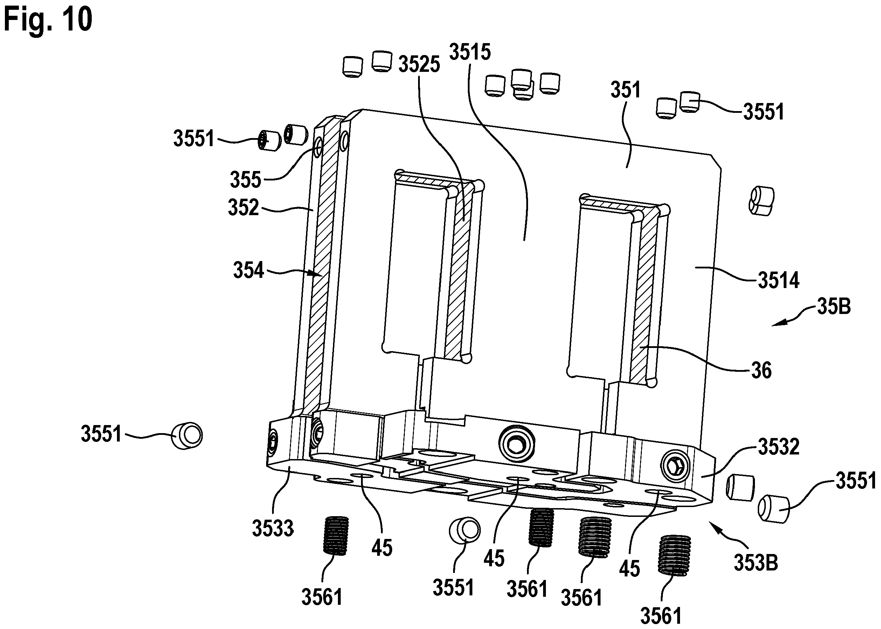

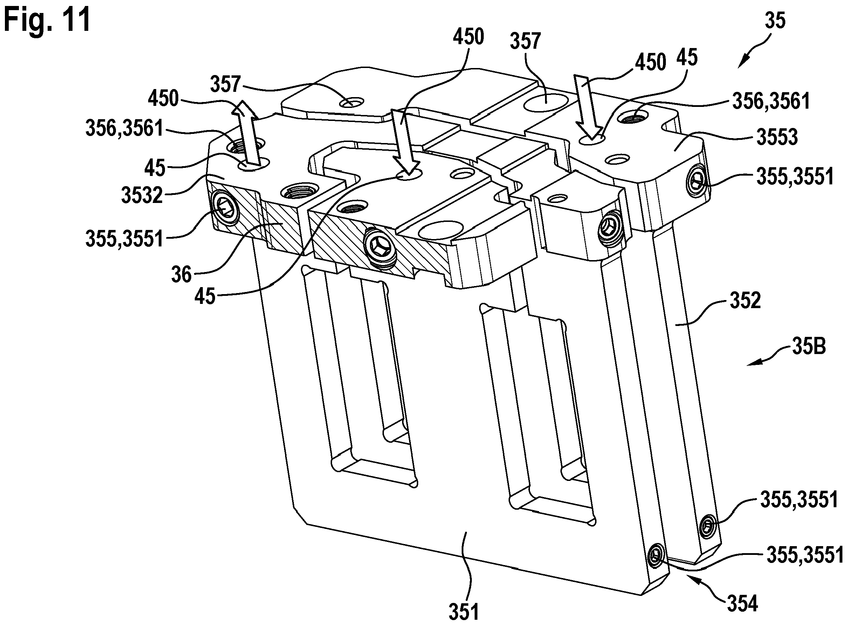

The module 35B of Fig. 4 may be produced by a method as explained below by reference to Figs. 5 to 9. The winding 35 of Fig. 11 may then be achieved by the method step illustrated in Fig. 10.

Fig. 5 shows a profile 350 having first and second fins 3501, 3502 and a base 3503 as one-piece. The profile 350 of Fig. 5 is a one-piece profile. Alternatively spoken, the profile 350 is a monobloc profile. Basically, the profile 350 has a T-cross-section. Herein, the first and second fins 3501, 3502 form together the vertical stem of the T. Thus, the extruded profile 350 has a T-cross-section having a double stem. The first and second fins 3501, 3502 are integrally connected with the base 3503. The profile 350 may be an extruded profile. Alternatively, the profile 350 may be a cast piece or made by another production method.

The first and second fins 3501, 3502 each have a plate-like form. The base 3503 forms the transverse beam or the horizontal part of the T. The first and second fins 3501, 3502 protrude from the base 3503. The first and second fins 3501, 3502 are spaced from each other in the direction of the base 3503 by the space 354. Basically, the first and second fins 3501, 3502 have identical shape or almost identical shape.

In the example of Fig. 5, the profile 350 is made from metal, in particular copper. Alternatively, another metal having suitable electric conduction properties may be used for the profile 350. In particular, the profile 350 may be made from aluminium.

As shown in Fig. 6, a piece 3500 may be cut from the profile 350 for a module 35B, in case the profile 350 is longer than needed for the module 35B shown in Fig. 4. Alternatively, the profile 350 may be already provided as the piece 3500 as needed. In this case, cutting the profile 350 of Fig. 5 in pieces 3500 as shown in Fig. 6 is not required.

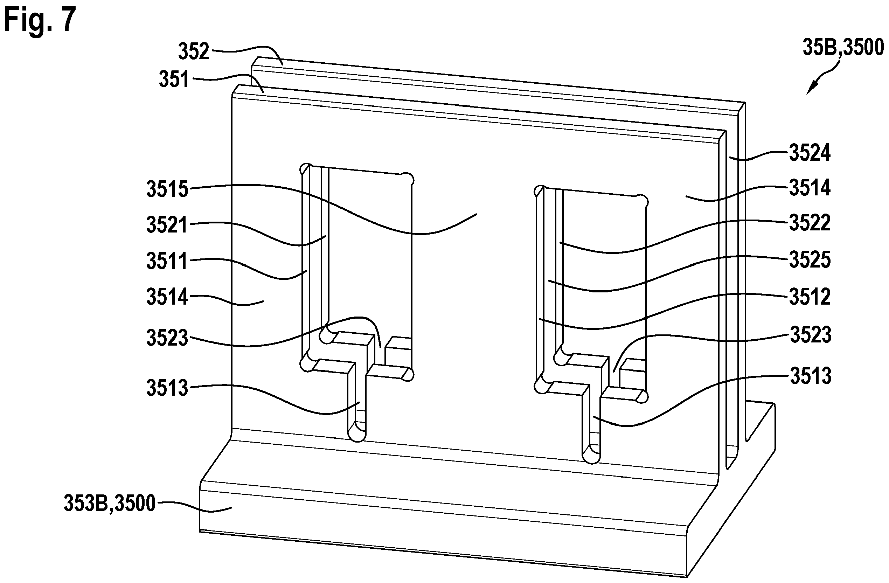

The piece 3500 of Fig. 6 forms the raw module from which the module 35B of Fig. 4 is formed in the following steps illustrated by Fig. 7 to Fig. 10. Thus, the fins 3501, 3502 and the base 3503 are labelled with the corresponding reference signs 351, 352, 353 of the module 35B shown in Fig. 4. In the following, only the reference signs of the module 35B are used to explain the method of producing the module 35B of Fig. 4. The piece 3500 of Fig. 6 may instead build the basis from which the module 35A of Fig. 3 is formed similar to the following steps illustrated by Fig. 7 to Fig. 10.

As shown in Fig. 7, the windows 3511, 3512 in the first winding element 351 are made by milling into the piece 3500 of Fig. 6. Milling of the window 3511 may start with an access 3513. Milling of the window 3512 may start with an access 3513. Milling of the window 3521 may start with an access 3523. Milling of the window 3522 may start with an access 3523. Milling of each of the accesses 3513, 3523 is started near the base element 353B and leads away from the base element 353B in the direction in which the corresponding winding element 351, 352 protrudes from the base element 353B.

Thus, in Fig. 7, each access 3513, 3523 has a width which corresponds to the diameter of the milling tool used for milling the accesses 3513, 3523 and the corresponding window 3511, 3512, 3521, 3522. Each access 3513, 3523 is positioned between the base element 353B and the corresponding window 3511, 3512, 3521, 3522.

The window 3511 of the first winding element 351 and the window 3521 of the second winding element 352 have the same axis extending in the direction in which the first and second winding elements 351, 352 are positioned spaced to each other. Further, the window 3512 of the first winding element 351 and the window 3522 of the second winding element 352 have the same axis extending in the direction in which the first and second winding elements 351, 352 are positioned spaced to each other. Thus, the windows 3511, 3521 of the first and second winding elements 351, 352 may be milled in one milling step. Further, the windows 3512, 3522 of the first and second winding elements 351, 352 may be milled in one milling step.

The windows 3511, 3512 have the same shape in the example of the winding element 351 of Fig. 7. The windows 3511, 3512 are surrounded by a frame 3514 of the winding element 351. The windows 3511, 3512 are spaced by a bar 3515 in the frame 3514. The frame 3514 of the winding element 351 has basically the same width along the sides of the windows 3511, 3512. The bar 3515 spacing the windows 3511, 3512 in the winding element 351 has a wider width than the frame width along the sides of the windows 3511, 3512. The same is valid for the shape of the winding element 352 and its windows 3521, 3522 surrounded by a frame 3524 having a bar 3525.

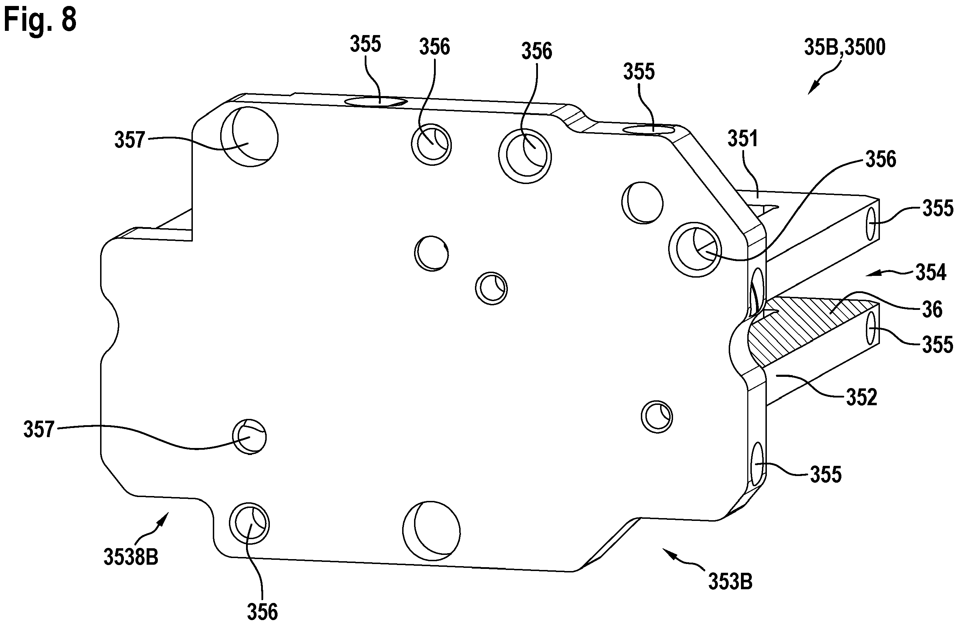

Fig. 8 shows a specific example for the outer shape 3538 of the base element 353B. The shape 3538 may be milled in the next step following the step of milling illustrated in Fig. 7. For this purpose, the milling tool mills recesses into the base element 353B as needed.

Moreover, the holes 355 to 357 may be milled. Herein, the holes 355 are blind holes and/or through holes which are connected with each other in the elements 351, 352, 353 to form the cooling channel 45 in the winding elements 351, 352 and the base element 353B. Instead, the holes 356, 357 are each through holes. The second holes 356 are additionally provided with a thread, as shown by two concentric rings in Fig. 8. Thus, the second holes 356 are prepared as threaded holes 356. In addition, it is possible that at least one of the first holes 355 is prepared as threaded hole.

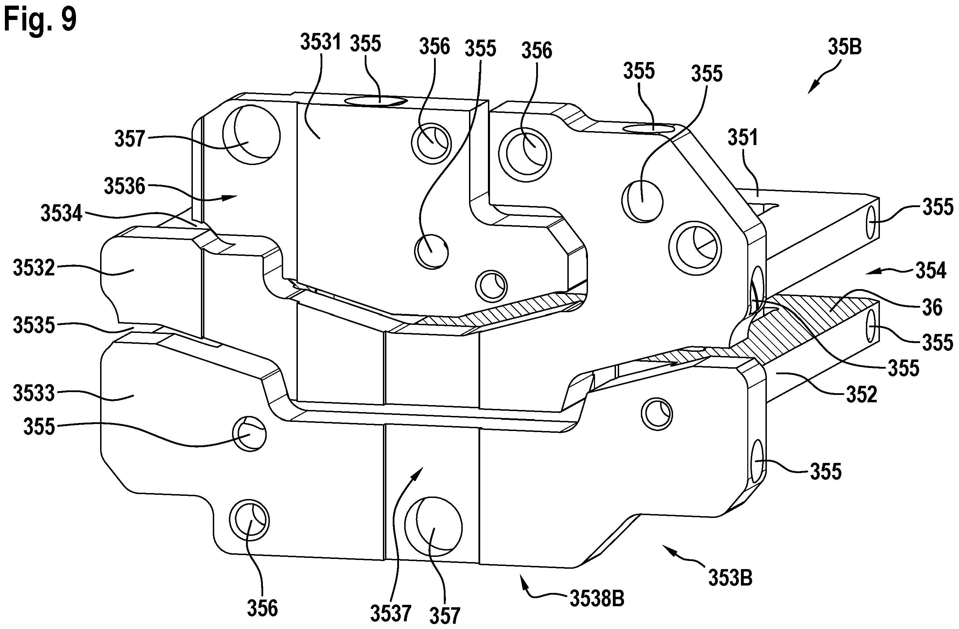

As shown in Fig. 9, the base element 353B of Fig. 8 is divided by two grooves 3534, 3535 so that the sections 3531, 3532, 3533 are formed. Each of the grooves 3534, 3535 may be performed by milling. The grooves 3534, 3535 separate the sections 3531, 3532, 3533. In detail, the groove 3534 separates the sections 3531, 3532. The groove 3535 separates the sections 3532, 3533. Thus, all of the sections 3531, 3532, 3533 are positioned spaced from one another, namely by one of the grooves 3534, 3535. Each one of the grooves 3534, 3535 is winding between the corresponding sections 3531, 3532, 3533. All of the sections 3531, 3532, 3533 of the base element 353 differ in shape and form. Herein, the outer contour of all of the sections 3531, 3532, 3533 of the base element 353B differ in shape. In other words, the sections 3531, 3532, 3533 are varied in shape and form.

The first section 3531 is connected with the first winding element 351, only. That is, the first section 3531 is not connected with the second winding element 352. The second section 3532 is connected with the first and second winding elements 351, 352. The third section 3533 is connected with the second winding element 352, only. That is, the third section 3533 is not connected with the first winding element 351. As regards an intermediate frequency direct current transformer (MF-DC transformer) as the transformer 30, the third section 3533 may constitute a first positive conductive part of the MF-DC transformer, the first section 3531 may constitute a second positive conductive part of the MF-DC transformer, and the second section 3532 may constitute the negative conductive part of the MF-DC transformer.

Further, recesses 3536, 3567 are milled into the bottom side of the base element 353B. The recess 3536 is milled into the bottom side of the first and second sections 3531, 3532 of the base element 353B. The recess 3537 is milled into the bottom side of the second and third sections 3532, 3533 of the base element 353B. Each recess 3536, 3567 is positioned transverse to each one of the grooves 3534, 3535 which the recess 3536, 3567 crosses.

The, recesses 3536, 3567 may be milled after or before the grooves 3534, 3535 are milled.

Therewith, milling for forming the shape and/or form and/or contour of the module 35B is finished. The module 35B is a one-piece module.

According to Fig. 10, the module 35B is provided in a further step by a plurality of first inserts 3551, which may be formed as first thread inserts 3551, for example. Each first thread insert 3551 is thread in one of the first holes 355 to seal the cooling channel 45 of the module 35B to the outside of the module 35B. At least one of the first thread inserts 3551 may be formed as a threaded plug. For example, as shown in Fig. 10, the cooling channel 45 formed in the module 35B has two inlets, namely one in the first section 3531 of the base element 353B and one in the third section 3533 of the base element 353B, but only one outlet in the second section 3532 of the base element 353B. Thus, the coolant 450 can be guided from the rectifier 40 through the cooling channel 45 and back to the rectifier 40, wherein the cooling channel 45 is built by the holes 355 in the module 35B and which are sealed to the outside of the elements 351 to 353 by the first thread inserts 3551, in particular threaded plugs, where needed.

Further in Fig. 10, the module 35B is provided by a plurality of second thread inserts 3561. Each second thread insert 3561 is thread in one of the second holes 356. Therewith, the second holes 356 are prepared for mounting the module 35B to the other parts of the transformer-rectifier-unit 30, 40 shown in Fig. 2 and as described above. The third holes 357 may be used without inserts to mount the module 35B to the other parts of the transformer-rectifier-unit 30, 40.

As a result, the winding 35 is provided, as shown in Fig. 11.

Likewise, the module 35A of Fig. 3 may be produced as explained above by reference to Figs. 5 to 9, except that the several sections 3531, 3532, 3533 and the outer contour 3538 of the base element 353 are formed for the module 35A, as shown in Fig. 3. Then, the steps illustrated in Fig. 10 and Fig. 11 may be performed for the module 35A of Fig. 3 to build the winding 35, as shown in Fig. 2.

All of the above-described implementations of the plant 1, the device 2, the transformer 30, the transformer-rectifier-unit 30, 40, the winding 35, the modules 35A, 35B and the above-described methods can be used separately or in all possible combinations thereof. The features of the first and second embodiments and/or their modifications can be combined arbitrarily. Moreover, in particular, the following modifications are conceivable.

The elements shown in the figures are depicted schematically and can differ in the specific implementations from the forms shown in the figures provided that the above-described functions are ensured.

The shape of the elements 351, 352, 353, especially the outer contour 3538 of the base elements 353, 353B, may be adapted to the specific requirements of the welding device 2.

Additionally or alternatively, the dimensions of the elements 351, 352, 353 may be adapted to the specific requirements of the welding device 2. That is, the thickness of the plate-like shape used for the elements 351, 352, 353 may differ from the thickness of the plate-like shape of the elements 351, 352, 353 shown in the drawings.

In case the transformer 30 has two cores 37, the first and second winding elements 351, 352 may each have only one window 3511, 3521. Each one of the two cores 37 may thus be mounted through the windows 3511, 3521 and around one side of the frames 3514, 3524 of the winding elements 351, 352. The transformer 30 may have more than two cores, so that each one of the winding elements 351, 352 may have more than two windows 3511, 3512.

Additionally or alternatively, the number and/or the position and/or the shape of the holes 355 to 357 in the elements 351, 352, 353 may be adapted to the specific requirements of the welding device 2 and thus differ from the specific examples shown in Figs. 2 to 11. In particular, at least one of the holes 355 to 357 may be a long hole instead of the round holes 355 to 357 shown in the figures of the drawing.

## Claims

1. Method for producing a winding (35) for a welding transformer (30), wherein handling a one-piece profile (350; 3500) is performed for forming a one-piece winding module (35A; 35B) which comprises a first winding element (351), a second winding element (352) and a base element (353; 353B), wherein each one of the first and second winding elements (351; 352) protrudes from the base element (353; 353B) and wherein the first and second winding elements (351; 352) are positioned spaced to each other at the base element (353; 353B) so that the one-piece profile (350; 3500) and the winding module (35A; 35B) have a t-cross-section, the method comprising the steps of
milling at least one window (3511; 3512) into the first winding element (351) so that the first winding element (351) frames the at least one window (3511; 3512) for accommodating a part of a core (37) of the welding transformer (30),
milling at least one window (3521; 3522) into the second winding element (352) so that the second winding element (352) frames the at least one window (3521; 3522) for accommodating a part of the core (37) of the welding transformer (30), and
milling grooves (3534, 3535) into the base element (353; 353B) to separate the base element (353; 353B) into sections (3531, 3532, 3533),
wherein the grooves (3534, 3535) are milled such that at least one of the sections (3531, 3532, 3533) is connected to the first and second winding elements (351; 352) and such that at least one of the sections (3531, 3532, 3533) is connected to only one of the first and second winding elements (351; 352).

2. Method according to claim 1, wherein milling one window (3511; 3512) of the first winding element (351) and milling one window (3521; 3522) of the second winding element (352) is performed in one milling step.

3. Method according to claim 1 or 2, further comprising the steps of
milling first holes (355) into the first and second winding elements (351, 352) as well as the base element (353; 353B) to form a cooling channel (45) in the one-piece winding module (35A; 35B), and
providing each first hole (355) with an insert (3551) for sealing the cooling channel (45) to the outside of the one-piece winding module (35A; 35B).

4. Method according to any one of the claims 1 to 3, further comprising the steps of
milling second holes (356) into the base element (353; 353B), and
providing at least one of the second holes (356) with an insert (3561) for connecting the one-piece winding module (35A; 35B) with other parts of a transformer-rectifier-unit (30, 40).

5. Method according to any one of the claims 1 to 4, further comprising a step of coating the profile (350; 3500) or the winding module (35A; 35B) at least partly by a coating (36) for protecting the winding module (35A; 35B) against corrosion.

6. A winding (35) for a welding transformer (30), the winding (35) comprising a one-piece winding module (35A; 35B) built from a one-piece profile (350; 3500), the one-piece winding module (35A; 35B) comprising
a first winding element (351) framing at least one window (3511; 3512) for accommodating a part of a core (37) of the welding transformer (30),
a second winding element (352) framing at least one window (3521; 3522) for accommodating a part of the core (37) of the welding transformer (30), and
a base element (353; 353B),
wherein each one of the first and second winding elements (351; 352) protrudes from the base element (353; 353B),
wherein the first and second winding elements (351; 352) are positioned spaced to each other at the base element (353; 353B) so that the one-piece winding module (35A; 35B) has a t-cross-section, and
wherein the base element (353; 353B) comprises grooves (3534, 3535) which separates the base element (353; 353B) into sections (3531, 3532, 3533), and
wherein at least one of the sections (3531, 3532, 3533) is connected to the first and second winding elements (351; 352), and
wherein at least one of the sections (3531, 3532, 3533) is connected to only one of the first and second winding elements (351; 352).

7. The winding (35) according to claim 6, wherein the first and second winding elements (351) as well as the base element (353; 353B) comprise a cooling channel (45) for flowing a coolant (450) through the first and second winding elements (351; 352) as well as the base element (353; 353B).

8. The winding (35) according to claim 6 or 7,
wherein each one of the first and second winding elements (351; 352) comprises at least one hole (355) to form the coolant channel (45), and
wherein at least one hole (355) in the first and/or second winding elements (351; 352) is a blind hole and at least one hole (355) in the first and/or second winding elements (351; 352) is a through hole so that the holes (355) cross each other to form the coolant channel (45).

9. The welding transformer (30) according to claim 7 or 8, wherein the one-piece winding module (35A; 35B) further comprises inserts (3551) in the cooling channel (45) for sealing the cooling channel (45) to the outside of the one-piece winding module (35A; 35B) or for connecting the cooling channel (45) to a coolant supply.

10. The winding (35) according to any one of the claims 6 to 9,
wherein the first winding element (351) forms a frame (3514) for two windows (3511; 3512),
wherein the windows (3511; 3512) of the first winding element (351) are spaced from each other by a bar (3515) of the first winding element (351),
wherein the second winding element (352) forms a frame (3524) for two windows (3521; 3522), and
wherein the windows (3521; 3522) of the second winding element (352) are spaced from each by a bar (3525) of the second winding element (352).

11. The winding (35) according to claims 6 to 10, wherein the material of the one-piece winding module (35A; 35B) is metal, in particular copper or aluminium.

12. The winding (35) according to any one of the claims 6 to 11, wherein the profile (350; 3500) is an extruded profile.

13. A welding transformer (30), comprising
a core (37),
a primary winding (34), and
a winding (35) according to any one of the claims 6 to 12,
wherein the winding (35) is positioned on the secondary side of the transformer (30), and
wherein the primary winding (34) is mounted to the core (37) and to the secondary winding (35).

14. A welding tool (10) for producing an article (4), comprising
a welding transformer (30) according to claim 13, and
a control unit (20) configured to adapt a welding current (12) for forming the article (4) by joining at least two parts of one workpiece (5) and/or at least two workpieces (5; 6) by at least one welding joint (7).

15. The welding device (2), comprising
a welding tool (10) according to claim 14, and
a device (50) for moving the welding tool (10) according to a predetermined moving profile along the at least one workpiece (5; 5, 6),
wherein the article (4) is a vehicle body.
